# EUROPEAN PATENT APPLICATION

(11) **EP 1 998 549 A2**
(43) Date of publication of application: **03.12.2008**
(21) Application number: 08009671.2
(22) Date of filing: 28.05.2008
(51) Int. Cl.: H04N 1/32

(54) **Memory card with GPS module**

(30) Priority: 30.05.2007 TW 96119283
(71) Applicant: ATP Electronics Taiwan Inc., Neihu Taipei City 114 (TW)
(72) Inventor: Hsieh, Tim, Guanyin Township Taoyuan County 328 (TW); Kuo, Yu-Yin, Neihu District, Taipei City 114 (TW); Kuo, Chun-Horn, Beitou District Taipei City 112 (TW); Chang, Che-Yuan, Jhongshan District, Taipei City 104 (TW)
(74) Representative: Becker, Bernd

(57) **Abstract**

The invention discloses a memory card comprising a GPS module, a storage unit, and a card controller. The GPS module is used for receiving a plurality of positional information. When an image file is being generated, the card controller is used for storing the image file to the storage unit and for immediately attaching positional information to the image file. The invention also discloses a memory card comprising a GPS module, a storage unit, a card controller, and a micro-controlling unit. The GPS module is used for receiving a plurality of positional information. When an image file is being generated, the card controller is used for storing the image file to the storage unit. The micro-controlling unit is used for immediately attaching positional information to the image file.

## Description

### BACKGROUND OF THE INVENTION

### 1. Field of the invention

The invention relates to a memory card; in particular, it relates to a memory card with a global positioning system (GPS) module.

### 2. Description of the prior art

With the advance of technology, more and more applications of GPS have been developed. GPS can be used for car navigation; besides, GPS integrated in a camera can record longitude and latitude information of where the photo is taken. Nowadays, a GPS recorder for recording positional and time information of where the user locates has been developed. Additionally, a photo of a digital camera generally is fit for exchangeable image file format (Exif), and the information of the photo such as camera type, date and image size can be obtained. Therefore, both information recorded by the GPS recorder and photos can be inputted into a computer; moreover, positional information of a photo can be attached to the photo. Afterward, users can upload the photo attached with positional information to Google Map or Google Earth website. Accordingly, the relation between places and photos can be presented by Google Map and Google Earth websites.

However, the GPS recorder nowadays can not directly connect with the memory card storing image files, and an electronic apparatus (e.g. a digital camera or a card reader) can not configure with a memory card, either. Namely, when a photo is taken by users, positional information can not be immediately attached to the photo. If users want to attach positional information to the photo (e.g. an image file), an independent device such as a computer is required. In other words, users must utilize computer and take additional time to attach positional information received from the GPS recorder to the photo. It is not convenient for users at all.

If the positional information can be immediately attached to an image file while the image file is being stored into a memory card, it will be very convenient for users. Furthermore, if the memory card is capable of providing a set of controlling commands which can be utilized by a host to get instantaneous GPS information, the memory card will be applied to more and more applications.

Therefore, the scope of the invention is to provide a memory card with a GPS module to solve the aforesaid problems.

### SUMMARY OF THE INVENTION

A scope of the invention is to provide a memory card with a GPS module. When a user takes an image file by a digital camera, the positional information received by the GPS module of the memory card will be immediately attached to the image file.

According to a preferred embodiment, the memory card of the invention comprises a GPS module, a storage unit, and a card controller. The GPS module is used for receiving a plurality of positional information. When an image file is being generated, the card controller is used for storing the image file to the storage unit and for immediately attaching the positional information to the image file.

According to another preferred embodiment, the memory card of the invention comprises a GPS module, a storage unit, a card controller, and micro-controlling unit (MCU). The GPS module is used for receiving a plurality of positional information. When an image file is being generated, the card controller is used for storing the image file to the storage unit. The micro-controlling unit is used for immediately attaching the positional information to the image file.

Therefore, according to the memory card with the GPS module of the invention, when the image file is being generated, the positional information will be immediately and automatically attached to the image file. It is very convenient for user without additional operation.

The advantage and spirit of the invention may be understood by the following recitations together with the appended drawings.

### BRIEF DESCRIPTION OF THE APPENDED DRAWINGS

FIG. 1 is a functional block diagram illustrating a memory card according to a preferred embodiment of the invention.
FIG. 2 is a functional block diagram illustrating a memory card according to another preferred embodiment of the invention.

### DETAILED DESCRIPTION OF THE INVENTION

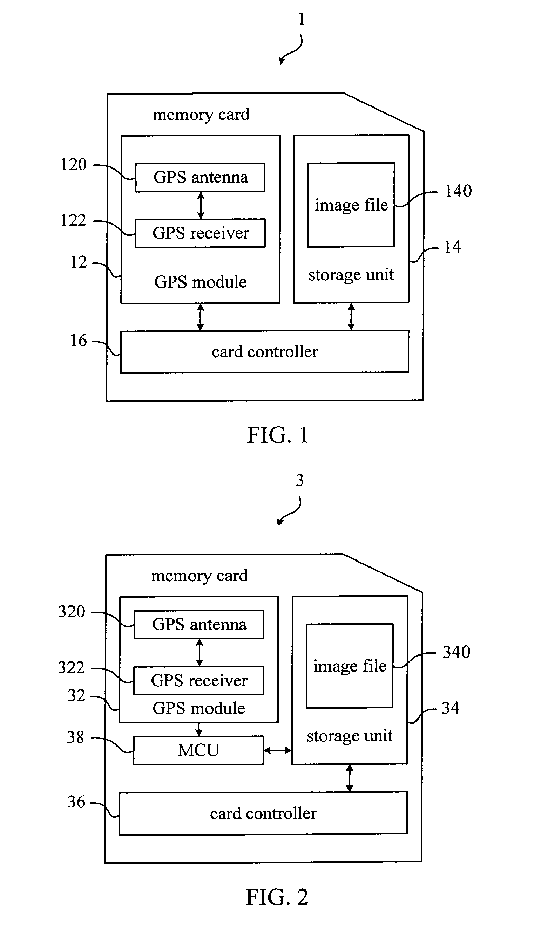

Please refer to FIG. 1. FIG. 1 is a functional block diagram illustrating a memory card 1 according to a preferred embodiment of the invention. The memory card 1 comprises a GPS module 12, a storage unit 14, and a card controller 16. The GPS module comprises a GPS antenna 120 coupled to a GPS receiver 122. The storage unit 14 can be a NAND flash memory or the like.

In this embodiment, the GPS module 12 is used for receiving a plurality of positional information (not shown). When an image file 140 is being generated, the card controller 16 is used for storing the image file 140 to the storage unit 14 and for immediately attaching the positional information to the image file 140. It should be noticed that the positional information comprises a coordinate and/or place name.

For example, when a user takes the image file 140 at Taipei, the positional information received by the GPS module 12 is "Taipei" correspondingly. Therefore, while the image file 140 is stored into the storage unit 14 by the card controller 16, the card controller 16 will immediately attach the positional information (Taipei) to the image file 140. Similarly, when the user takes another image file at different position, the card controller 16 will also immediately attach the positional information received by the GPS module 12 to the corresponding image file.

Please refer to FIG. 2. FIG. 2 is a functional block diagram illustrating a memory card 3 according to another preferred embodiment of the invention. The memory card 3 comprises a GPS module 32, a storage unit 34, a card controller 36, and a micro-controlling unit (MCU) 38. The GPS module 32 comprises a GPS antenna 320 coupled to a GPS receiver 322. The storage unit 34 can be a NAND flash memory or the like.

In this embodiment, the GPS module 32 is used for receiving a plurality of positional information (not shown). When an image file 340 is being generated, the card controller 36 is used for storing the image file 340 to the storage unit 34. The micro-controlling unit 38 is used for immediately attaching the positional information to the image file 340. It should be noticed that the positional information comprises a coordinate and/or place name.

For example, when a user takes the image file 340 at Taipei, the positional information received by the GPS module 32 is "Taipei" correspondingly. Therefore, while the image file 340 is stored into the storage unit 34 by the card controller 36, the micro-controlling unit 38 will immediately attach the positional information (Taipei) to the image file 340. Similarly, when the user takes another image file at different position, the micro-controlling unit 38 will also immediately attach the positional information received by the GPS module 32 to the corresponding image file.

Compared to the prior art, according to the memory card with the GPS module of the invention, when the image file is being generated, the positional information will be immediately and automatically attached to the image file. It is very convenient for user without additional operation.

With the example and explanations above, the features and spirits of the invention will be hopefully well described. Those skilled in the art will readily observe that numerous modifications and alterations of the device may be made while retaining the teaching of the invention. Accordingly, the above disclosure should be construed as limited only by the metes and bounds of the appended claims.

## Claims

1. A memory card, comprising:
a global positioning system (GPS) module for receiving a plurality of positional information;
a storage unit; and
a card controller, when an image file is being generated, for storing the image file to the storage unit and for immediately attaching one of the positional information to the image file

2. The memory card of claim 1, wherein the GPS module comprises a GPS receiver and a GPS antenna coupled to the GPS receiver.

3. The memory card of claim 1, wherein each of the positional information comprises a coordinate and/or a place name.

4. The memory card of claim 1, wherein the storage unit is a NAND flash memory.

5. A memory card, comprising:
a global positioning system (GPS) module for receiving a plurality of positional information;
a storage unit;
a card controller, when an image file is being generated, for storing the image file to the storage unit; and
a micro-controlling unit for immediately attaching one of the positional information to the image file.

6. The memory card of claim 5, wherein the GPS module comprises a GPS receiver and a GPS antenna coupled to the GPS receiver.

7. The memory card of claim 5, wherein each of the positional information comprises a coordinate and/or a place name.

8. The memory card of claim 5, wherein the storage unit is a NAND flash memory.
